# FASCICULE DE BREVET EUROPEEN

(11) **EP 1 707 864 B1**
(45) Date de publication et mention de la délivrance du brevet: **10.02.2010**
(21) Numéro de dépôt: 06290443.8
(22) Date de dépôt: 20.03.2006
(51) Int. Cl.: F16L 55/132, F16L 55/136, F16K 17/34

(54) **Dispositif de contrôle d'écoulement insérable dans une canalisation, à ancrage assisté**
Durchflusssteuervorrichtung mit unterstüzter Verankerung, einsetzbar in eine Leitung
Flow control device mountable in a conduit, with assisted anchoring

(30) Priorité: 31.03.2005 FR 0503167
(43) Date de publication de la demande: 04.10.2006
(73) Titulaire: GDF SUEZ, 75008 Paris (FR)
(72) Inventeur: Mesnier, Luc, 77410 Fresnes Sur Marne (FR); Dalibey, Amine, 94400 Vitry Sur Seine (FR)
(74) Mandataire: Bentz, Jean-Paul

(56) Documents cités:
- EP-A- 0 533 063
- EP-A- 1 388 697
- US-A- 3 307 732
- US-A- 4 938 259
- US-A- 6 053 210

## Description

L'invention concerne, de façon générale, les techniques relatives à l'exploitation de réseaux de canalisations, et notamment de canalisations de gaz.

Plus précisément, l'invention concerne un dispositif de contrôle d'écoulement inséré, en fonctionnement, dans une canalisation dans laquelle un fluide, par exemple gazeux, circule d'amont en aval, ce dispositif comprenant au moins une vanne de sécurité ou d'arrêt dotée d'un corps présentant un côté amont et un côté aval, un obturateur annulaire à membrane tubulaire déformable, et des moyens d'ancrage solidaires du corps de vanne et propres à l'arrimer, en fonctionnement, dans la canalisation, la vanne étant propre à interrompre au moins sélectivement une veine fluide centrale définie au coeur de la canalisation, la membrane étant apte à se déployer radialement pour canaliser le fluide vers la veine centrale, et les moyens d'ancrage comprenant une pluralité de pattes dont chacune présente une extrémité liée, fixe en position par rapport au corps de vanne, et une extrémité libre, mobile par rapport au corps de vanne, ces pattes se déployant radialement en parapluie sous l'effet d'une sollicitation élastique jusqu'à ce que leurs extrémités libres prennent appui sur la paroi interne de la canalisation.

Un dispositif de ce type est notamment décrit dans la demande de brevet EP 1 388 697.

Cette demande de brevet, qui émane du même déposant, préconise l'emploi de pattes appliquées sur la paroi interne de la canalisation grâce à leur élasticité propre, sous l'effet de laquelle elles se déploient.

Bien que présentant d'indéniables qualités, ce dispositif connu s'est avéré n'offrir, dans certaines circonstances, qu'une force de blocage insuffisante pour résister à la pression du fluide sans risque de migration à l'intérieur de la canalisation.

L'invention, qui se situe dans ce contexte, a pour but de proposer un dispositif susceptible d'être inséré dans une canalisation et de s'y maintenir en place même dans des conditions difficiles et sans dommage pour cette canalisation.

A cette fin, le dispositif de l'invention, par ailleurs conforme à la définition générique qu'en donne le préambule ci-dessus, est essentiellement **caractérisé en ce que** la membrane est solidaire des pattes et présente un bord lié, par lequel cette membrane se raccorde de façon étanche au corps de vanne, et un bord libre disposé en amont du bord lié en regard des extrémités libres des pattes, et en ce que le déploiement des pattes s'accompagne d'un déploiement de la membrane par expansion de son bord libre, jusqu'à l'application de ce bord libre sur la paroi interne de la canalisation, le fluide exerçant sur la membrane déployée une pression qui augmente l'appui des extrémités libres des pattes sur la paroi interne de la canalisation.

Grâce à cet agencement, la pression du fluide agit sur la membrane dans un sens propre à augmenter l'appui des pattes sur la paroi interne de la canalisation, la force de maintien du dispositif dans la canalisation étant ainsi une fonction croissante de la pression.

De préférence, le bord libre de la membrane présente un bourrelet appliqué en fonctionnement sur la paroi interne de la canalisation.

Bien que les pattes puissent être articulées par leurs extrémités liées, il est également possible de prévoir qu'elles soient réalisées en un matériau flexible et par exemple qu'elles se raccordent au corps de vanne par leurs extrémités liées.

Pour augmenter la force de frottement des pattes dans la canalisation, ces pattes peuvent présenter, à leurs extrémités libres, des stries formant griffes de retenue.

Le dispositif de l'invention peut en outre comprendre un ressort en cône ou en spirale disposé pour appliquer ladite sollicitation élastique.

De préférence, la membrane et les pattes sont disposées du côté amont du corps de vanne.

D'autres caractéristiques et avantages de l'invention ressortiront clairement de la description qui en est faite ci-après, à titre indicatif et nullement limitatif, en référence aux dessins annexés, dans lesquels:
- la figure 1 est une vue schématique de côté d'un dispositif conforme à l'invention, représenté replié dans un fourreau de constriction lui-même inséré dans une canalisation;
- la figure 2 est une vue schématique de côté du dispositif illustré à la figure 1, représenté déployé dans la canalisation après avoir été éjecté du fourreau de constriction;
- la figure 3 est une vue schématique de côté du dispositif illustré à la figure 2, représenté dans un état de début de gonflement de la membrane;
- la figure 4 est une vue schématique de côté du dispositif illustré aux figures 2 et 3, représenté dans un état de gonflement avancé de la membrane;
- la figure 5 est une vue schématique en coupe du dispositif illustré à la figure 1, représenté dans son état replié;
- la figure 6 est une vue agrandie du détail repéré par la référence VI de la figure 5; et
- la figure 7 est une vue en bout du dispositif représenté sur la figure 5.

Comme annoncé précédemment, l'invention concerne un dispositif de contrôle d'écoulement destiné, en fonctionnement, à être inséré dans une canalisation K dans laquelle un fluide, par exemple un gaz, circule dans un sens allant de l'amont X- vers l'aval X+.

Ce dispositif comprend une vanne 1 de sécurité ou d'arrêt, un obturateur à membrane 2, et des moyens d'ancrage 3.

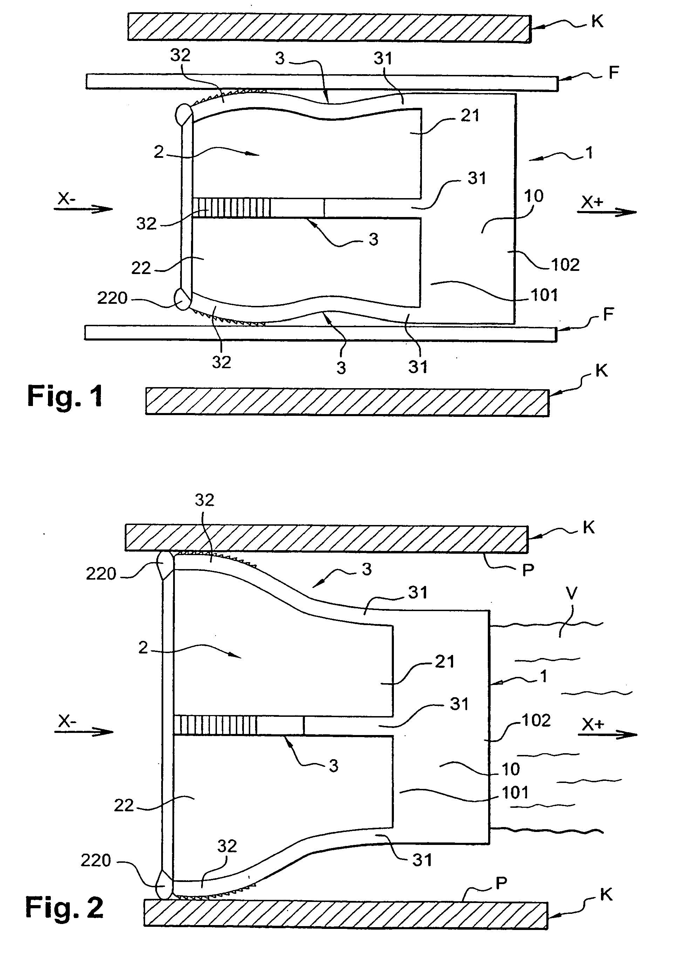

La vanne 1, dont la structure interne spécifique n'a pas été représentée et n'appartient pas à l'invention, a pour fonction d'interrompre, au moins dans certaines conditions prédéterminées, une veine centrale V de fluide définie au coeur de la canalisation K (figure 2) .

Pour autant qu'elle puisse remplir sa fonction, cette vanne présente une structure quelconque et peut notamment prendre toute forme connue de l'homme du métier, par exemple l'une ou l'autre des formes que décrivent les documents de brevet EP 1 059 481 et EP 1 388 697.

Cette vanne est dotée d'un corps 10 présentant un côté amont 101 et un côté aval 102, ces côtés étant respectivement tournés, en fonctionnement, vers l'amont X- et vers l'aval X+ de l'écoulement de fluide.

L'obturateur à membrane présente une forme annulaire et est constitué par une membrane tubulaire déformable 2 apte à se déployer radialement pour canaliser le fluide vers la veine centrale V, c'est-à-dire bloquer la circulation de fluide en périphérie du corps 10 de la vanne 1.

Les moyens d'ancrage 3, qui sont solidaires du corps 10 de vanne et qui servent à l'arrimer en fonctionnement dans la canalisation K, sont constitués par une pluralité de pattes 3.

Chaque patte 3 présente une extrémité liée 31 qui est fixe en position par rapport au corps 10 de vanne, et une extrémité libre 32 qui est mobile par rapport au corps 10 de vanne.

Les pattes 3 sont en permanence soumises à une sollicitation élastique de manière, en situation opérationnelle, à se déployer radialement en parapluie jusqu'à ce que leurs extrémités libres 32 viennent prendre appui sur la paroi interne P de la canalisation K.

En pratique, le dispositif peut initialement (figure 1) être maintenu dans un fourreau F pendant son insertion dans la canalisation K, les pattes 3 étant alors repliées.

Une fois en place dans la canalisation K, le dispositif peut être éjecté du fourreau F par tout moyen connu, les pattes 3 se déployant alors comme illustré à la figure 2 sous l'effet de la sollicitation élastique qu'elles reçoivent.

Selon l'invention, la membrane 2 est solidaire des pattes 3 et présente un bord lié 21 et un bord libre 22.

De préférence, la membrane 2 et les pattes 3 sont disposées du côté amont 101 du corps 10 de vanne.

La membrane 2 se raccorde de façon étanche au corps 10 de vanne par son bord lié 21, tandis que le bord libre 22 de cette membrane est disposé en amont du bord lié 21 et adjacent aux extrémités libres 32 des pattes 3.

Dans ces conditions, les mouvements du bord libre 22 de la membrane suivent les mouvements des extrémités libres 32 des pattes 3, le déploiement des pattes 3 s'accompagnant ainsi d'un déploiement de la membrane 2 par expansion de son bord libre 22, jusqu'à l'application de ce bord libre sur la paroi interne P de la canalisation K.

Grâce à cet agencement, le fluide exerce sur la membrane 2 déployée une pression qui augmente l'appui des extrémités libres 32 des pattes 3 sur la paroi interne P de la canalisation K.

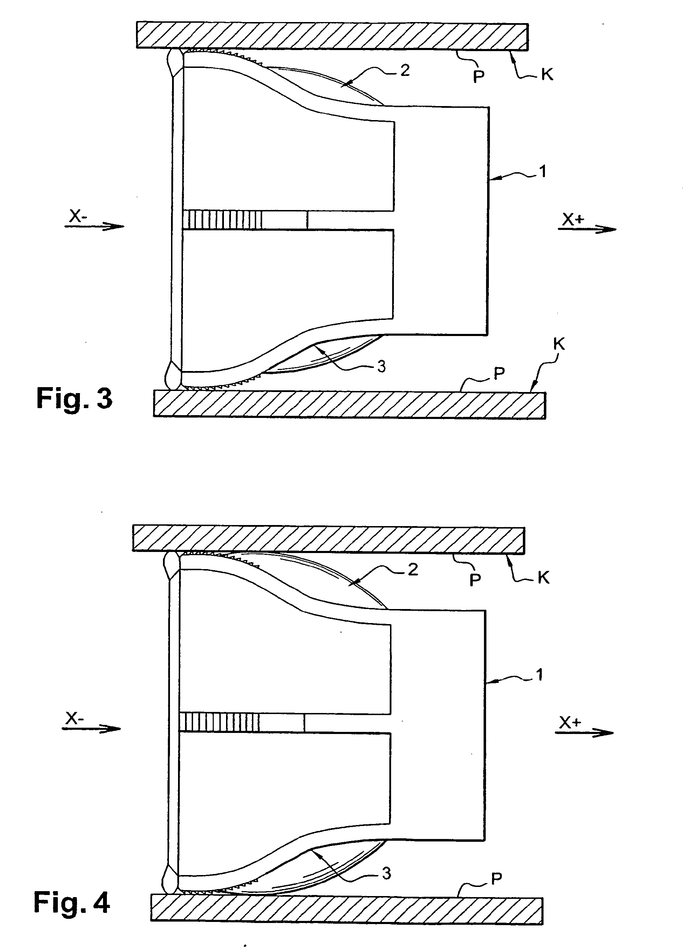

En cas de déclenchement de la vanne 1, c'est-à-dire en cas d'interruption de la veine centrale V de fluide, la membrane 2 peut se gonfler (figures 3 et 4) au niveau des zones de sa surface qui s'étendent entre deux pattes 3 adjacentes, et prendre ainsi elle-même appui sur la paroi P pour participer au maintien du dispositif dans la canalisation K.

Le bord libre 22 de la membrane présente avantageusement un bourrelet 220, qui est appliqué en fonctionnement sur la paroi interne P de la canalisation K.

Les pattes 3 se raccordent, par leurs extrémités liées 31, au côté amont 101 du corps 10 de vanne et peuvent donc être constituées de la même matière que ce dernier.

Pour éviter d'avoir à doter d'articulations les extrémités libres 32 des pattes 3, ces dernières peuvent être réalisées en un matériau flexible.

Par ailleurs, ces pattes 3 peuvent présenter, à leurs extrémités libres 32, des stries 320 formant griffes de retenue et augmentant l'adhérence des pattes sur la paroi interne P de la canalisation K.

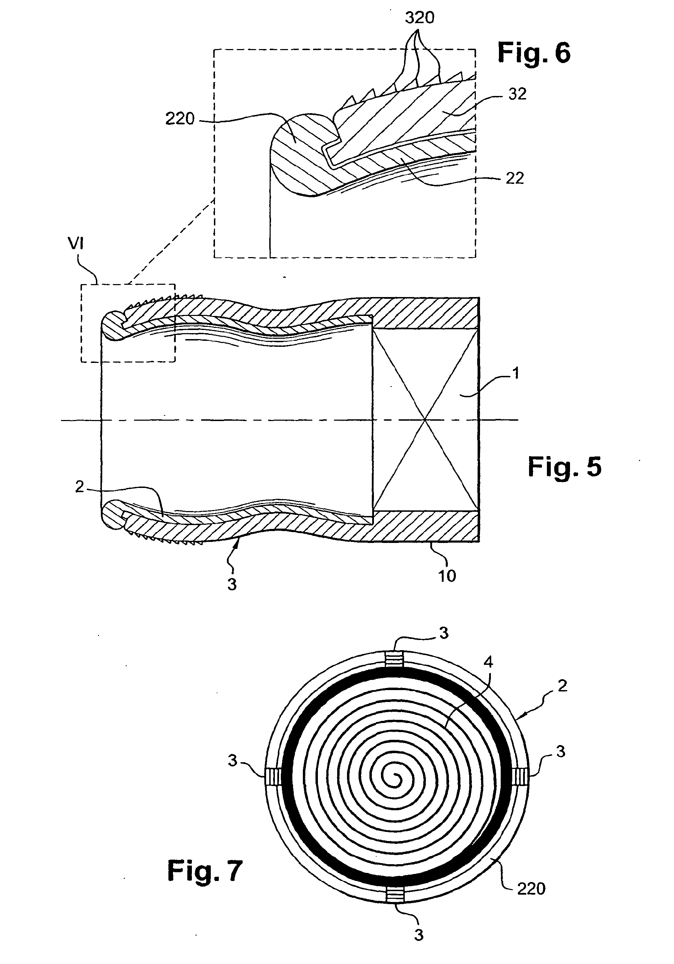

Le dispositif peut enfin comporter un ressort 4 (figure 7), conformé en cône ou en spirale, et disposé dans la membrane, à distance de son bord lié 21, pour appliquer sur les pattes la sollicitation élastique qui permet leur déploiement.

## Revendications

1. Dispositif de contrôle d'écoulement inserable dans une canalisation (K) dans laquelle un fluide, par exemple gazeux, circule d'amont (X-) en aval (X+), ce dispositif comprenant au moins une vanne (1) de sécurité ou d'arrêt dotée d'un corps (10) présentant un côté amont (101) et un côté aval (102), un obturateur annulaire à membrane tubulaire déformable (2), et des moyens d'ancrage (3) solidaires du corps (10) de vanne et propres à l'arrimer, en fonctionnement, dans la canalisation (K), la vanne (1) étant propre à interrompre au moins sélectivement une veine fluide centrale (V) définie au coeur de la canalisation (K), la membrane (2) étant apte à se déployer radialement pour canaliser le fluide vers la veine centrale (V), et les moyens d'ancrage (3) comprenant une pluralité de pattes (3) dont chacune présente une extrémité liée (31), fixe en position par rapport au corps (10) de vanne, et une extrémité libre (32), mobile par rapport au corps (10) de vanne, ces pattes (3) se déployant radialement en parapluie sous l'effet d'une sollicitation élastique jusqu'à ce que leurs extrémités libres (32) prennent appui sur la paroi interne (P) de la canalisation (K), **caractérisé en ce que** la membrane (2) est solidaire des pattes (3) et présente un bord lié (21), par lequel cette membrane (2) se raccorde de façon étanche au corps (10) de vanne, et un bord libre (22) disposé en amont du bord lié (21) en regard des extrémités libres (32) des pattes (3), et **en ce que** le déploiement des pattes (3) s'accompagne d'un déploiement de la membrane (2) par expansion de son bord libre (22), jusqu'à l'application de ce bord libre sur la paroi interne (P) de la canalisation (K), le fluide exerçant sur la membrane (2) déployée une pression qui augmente l'appui des extrémités libres (32) des pattes (3) sur la paroi interne (P) de la canalisation (K).

2. Dispositif suivant la revendication 1, **caractérisé en ce que** le bord libre (22) de la membrane présente un bourrelet (220) appliqué en fonctionnement sur la paroi interne (P) de la canalisation (K).

3. Dispositif suivant l'une quelconque des revendications précédentes, **caractérisé en ce que** les pattes (3) sont réalisées en un matériau flexible.

4. Dispositif suivant l'une quelconque des revendications précédentes, **caractérisé en ce que** les pattes (3) se raccordent au corps (10) de vanne par leurs extrémités liées (31).

5. Dispositif suivant l'une quelconque des revendications précédentes, **caractérisé en ce que** les pattes (3) présentent, à leurs extrémités libres (32), des stries (320) formant griffes de retenue.

6. Dispositif suivant l'une quelconque des revendications précédentes, **caractérisé en ce qu'**il comprend un ressort (4) en cône ou en spirale disposé pour appliquer ladite sollicitation élastique.

7. Dispositif suivant l'une quelconque des revendications précédentes, **caractérisé en ce que** la membrane (2) et les pattes (3) sont disposées du côté amont (101) du corps (10) de vanne.

## Claims

1. A flow control device for inserting into a conduit (K) in which a fluid, for example a gaseous fluid, flows from upstream (X-) to downstream (X+), said device comprising at least one safety or stop gate (1) having a body (10) with an upstream side (101) and a downstream side (102), an annular obturator with deformable tubular membrane (2), and anchoring means (3) integral with the gate body (10) and suitable for securing it in the conduit (K) during operation, the gate (1) being suitable for at least selectively interrupting a defined central fluid vein (V) at the centre of the conduit (K), the membrane (2) being capable of being deployed radially for channelling the fluid towards the central vein (V), and the anchoring means (3) comprising a plurality of flaps (3), each of which has an attached end (31), fixed in place relative to the gate body (10), and a free end (32), movable relative to the gate body (10), said flaps (3) being deployed radially in the way of an umbrella under the effect of spring biasing until their free ends (32) bear against the inside wall (P) of the conduit (K), **characterized in that** the membrane (2) is integral with the flaps (3) and has an attached edge (21), by which said membrane (2) is secured to the gate body (10) in such a way as to be leakproof, and a free edge (22) disposed upstream of the attached edge (21) opposite the free ends (32) of the flaps (3), **and in that** the deployment of the flaps (3) is accompanied by a deployment of the membrane (2) **in that** its free edge (22) expands until said free edge is applied to the inside wall (P) of the conduit (K), the fluid exerting on the deployed membrane (2) a pressure which increases the bearing force of the free ends (32) of the flaps (3) on the inside wall (P) of the conduit (K).

2. A device according to Claim 1, **characterized in that** the free edge (22) of the membrane has a bead (220) which is applied to the inside wall (P) of the conduit (K) during operation.

3. A device according to any one of the preceding claims, **characterized in that** the flaps (3) are made of a flexible material.

4. A device according to any one of the preceding claims, **characterized in that** the flaps (3) are joined to the gate body (10) by their attached ends (31).

5. A device according to any one of the preceding claims, **characterized in that** the flaps (3) have, at their free ends (32), ridges (320) forming retaining grippers.

6. A device according to any one of the preceding claims, **characterized in that** it has a conical or spiral spring disposed in such a way as to apply said spring biasing.

7. A device according to any one of the preceding claims, **characterized in that** the membrane (2) and the flaps (3) are disposed on the upstream side (101) of the gate body (10).

## Patentansprüche

1. Vorrichtung zur Durchflusssteuerung, die in eine Rohrleitung (K) einsetzbar ist, in welcher ein Fluid, zum Beispiel Gas, von oben (X-) nach unten (X+) strömt, wobei diese Vorrichtung wenigstens einen Sicherheits- oder Sperrschieber (1) umfasst, der mit einem Körper (10) versehen ist, der aufweist eine Oberseite (101) und eine Unterseite (102), ein ringförmiges Verschlussteil mit einer verformbaren rohrförmigen Membrane (2) und einer Verankerungseinrichtung (3), die mit dem Körper (10) des Schiebers fest verbunden ist und im Betrieb der Rohrleitung (K) so eingestellt werden kann, dass der Schieber (1) wenigstens wahlweise eine zentralen Fluidströmung (V), der im Kern der Rohrleitung (K) gebildet wird, unterbrechen kann, wobei die Membrane (2) so ausgebildet ist, dass sich diese radial ausweitet, um das Fluid in Richtung zentraler Strömung (V) zu kanalisieren und die Verankerungseinrichtung (3) eine Mehrzahl von Pratzen (3) aufweist, von denen jede aufweist ein verbundenes Ende (31), das in Bezug zum Körper (10) des Schiebers positionsfest ist, und ein freies Ende (32), das in Bezug zum Körper (10) des Schiebers beweglich ist, wobei diese Pratzen (3) unter dem Einfluss einer elastischen Beanspruchung schirmartig radial auseinandergehen, bis dass ihre freien Enden (32) an der Innenwand (P) der Rohrleitung (K) anstoßen, **dadurch gekennzeichnet, dass** die Membrane (2) mit den Pratzen (3) fest verbunden ist und aufweist einen Verbindungsrand (21), durch welchen sich diese Membrane in dichter Weise an den Körper (10) des Schiebers anschmiegt, und einen freien Rand (22), der oberhalb des verbundenen Randes (21) in Bezug auf die freien Enden (32) der Pratzen (3) angeordnet ist, und dass das Auseinandergehen der Zungen (3) von einem Auseinandergehen der Membrane (2) durch Ausdehnung ihres freien Randes (32) bis zur Anlage dieses freien Randes an der Innenwand (P) der Rohrleitung (K), begleitet wird, wobei das Fluid auf die ausgeweitete Membrane (2) einen Druck ausübt, der das Anschlagen der freien Enden (32) der Pratzen (3) an der Innenwand (P) der Rohrleitung (K) verstärkt.

2. Vorrichtung nach Anspruch 1, **dadurch gekennzeichnet, dass** der freie Rand (22) der Membrane eine Wulst (220) aufweist, die im Betrieb an der Innenwand (P) der Rohrleitung (K) anliegt.

3. Vorrichtung nach einem der vorhergehenden Ansprüche, **dadurch gekennzeichnet, dass** die Pratzen (3) aus einem flexiblen Material hergestellt sind.

4. Vorrichtung nach einem der vorhergehenden Ansprüche, **dadurch gekennzeichnet, dass** sich die Pratzen (3) an den Körper (10) des Schiebers mit ihren verbundenen Enden (31) anschmiegen.

5. Vorrichtung nach einem der vorhergehenden Ansprüche, **dadurch gekennzeichnet, dass** die Pratzen (3) an ihren freien Enden (32) Rillen (320) aufweisen, welche Haltekrallen bilden.

6. Vorrichtung nach einem der vorhergehenden Ansprüche, **dadurch gekennzeichnet, dass** diese eine Kegel- oder Spiralfeder (4) aufweist, die angeordnet ist, um die elastische Beanspruchung aufzubringen.

7. Vorrichtung nach einem der vorhergehenden Ansprüche, **dadurch gekennzeichnet, dass** die Membrane (2) und die Pratzen (3) an der Oberseite (101) des Körpers (10) des Schiebers angeordnet sind.
